# NEUE EUROPÄISCHE PATENTSCHRIFT

(11) **EP 2 530 365 B2**
(45) Veröffentlichungstag und Bekanntmachung des Hinweises auf die Entscheidung über den Einspruch: **20.09.2017**
(45) Hinweis auf die Patenterteilung: 19.03.2014
(21) Anmeldenummer: 12168683.6
(22) Anmeldetag: 21.05.2012
(51) Int. Cl.: F16K 11/04

(54) **Ventileinsatz für eine Sanitärarmatur**
Valve insert for a sanitary fitting
Garniture de soupape pour une armature sanitaire

(30) Priorität: 31.05.2011 DE 102011076828
(43) Veröffentlichungstag der Anmeldung: 05.12.2012
(73) Patentinhaber: Hansgrohe SE, 77761 Schiltach (DE)
(72) Erfinder: Hahn, Arno, 77761 Schiltach (DE)
(74) Vertreter: Patentanwälte Ruff, Wilhelm, Beier, Dauster & Partner mbB

(56) Entgegenhaltungen:
- EP-A1- 0 936 317
- EP-A1- 1 367 306
- EP-A2- 0 930 402
- EP-A2- 0 999 392
- WO-A1-86/07431
- WO-A1-88/10386
- JP-A- 2005 264 459
- JP-A- 2005 264 979
- JP-A- 2006 022 638
- JP-A- 2007 218 421
- JP-A- 2007 315 091
- JP-A- 2008 231 686
- JP-A- 2008 256 055
- JP-A- 2009 256 883
- US-A- 2 917 273
- US-A- 3 739 804
- US-A- 3 851 658
- US-A- 4 557 288
- US-A1- 2009 146 090

## Beschreibung

Die Erfindung betrifft einen Ventileinsatz zum Einsetzen in eine Sanitärarmatur. Bei Sanitärarmaturen gibt es die unterschiedlichsten Anforderungen, wie die Wasserführungen zu einem Absperrventil und von diesem Absperrventil weg gestaltet werden sollen. Je nach Art und Form der Armatur kann der Wassereinlass von unten her zu dem Absperrventil oder von der Seite her kommen, und auch der Abgang aus dem Ventil kann die unterschiedlichsten Richtungen einnehmen.

Es ist bereits ein Ventil zum Einbauen in eine Leitung für gefährliche, insbesondere korrosive Fluide bekannt, bei dem der eigentliche Ventilsitz in einem austauschbaren Element angeordnet ist. Dieses austauschbare Element muss durch eine seitliche durch eine Platte verschließbare Öffnung des Ventilgehäuses entnommen werden (US 3739804).

Weiterhin ist ein Ventileinsatz für eine Kompaktheizungsanlage zum Umschalten zwischen zwei Heizkreisen vorgesehen. Der gesamte Ventileinsatz kann bei Beschädigung ausgetauscht werden (EP 1367306 A1).

Ebenfalls bekannt ist ein Ventil, das in einem Ventilgehäuse ein unteres den Ventilsitz bildendes konisches Element aufweist, in dem ein Ventilschließkörper verschiebbar angeordnet ist. Dieses Element kann ausgetauscht werden, indem es entgegengesetzt zu dem Betätigungselement aus dem Ventilgehäuse herausgeschoben wird (US 2917273).

Der Erfindung liegt die Aufgabe zu Grunde, einen Ventileinsatz vorzuschlagen, der mit einfachen Maßnahmen an die unterschiedlichsten Einbauanforderungen angepasst werden kann.

Zur Lösung dieser Aufgabe schlägt die Erfindung einen Ventileinsatz vor, der die im Anspruch 1 genannten Merkmale aufweist. Weiterbildungen der Erfindung sind Gegenstand von Unteransprüchen. Des Weiteren schlägt die Erfindung eine Kombination des Ventileinsatzes mit mindestens einem weiteren Adapterelement als Austauschteil vor, welche die im Anspruch 7 genannten Merkmale aufweist.

Der Adapter, der die Wasserführungen von den Kanälen in dem Armaturengehäuse zu dem Ventil und von dem Ventil weg übernimmt, lässt sich nicht nur leicht herstellen, sondern auch leicht an die jeweilige Anwendungssituation anpassen. Dies gilt insbesondere dann, wenn er aus Kunststoff hergestellt ist. Durch Austauschen eines Adapters oder unter Umständen auch durch Umstecken eines Adapters kann der Ventileinsatz für die unterschiedlichsten Anwendungsfälle verwendbar gemacht werden.

Vorzugsweise kann vorgesehen sein, dass das Einsatzbasisteil das Betätigungselement und den Ventilschließkörper enthält und oben angeordnet ist. Das an der unteren Stirnseite des Einsatzbasisteils mit diesem verbundene Adapterelement hat insbesondere an der Verbindungsstelle den gleichen Durchmesser wie das Einsatzbasisteil. Der aus beiden Teilen aufgebaute Ventileinsatz kann als Einheit in eine Aufnahmeöffnung der Sanitärarmatur eingesetzt werden.

Erfindungsgemäss ist vorgesehen, dass auch der Ventilsitz des Ventils in dem Adapterelement angeordnet bzw. ausgebildet ist. Dies hat unter anderem auch den Vorteil, dass man den Ventilsitz durch Ändern des Adapterelements ebenfalls ändern kann.

In nochmaliger Weiterbildung der Erfindung kann vorgesehen sein, dass das Adapterelement Aufnahmen bzw. Halterungen für Dichtelemente aufweist, mit denen der Ventileinlass und/oder der Ventilauslass gegenüber dem Gehäuse der Sanitärarmatur abgedichtet werden kann. Es ist dann nicht erforderlich, dass die Dichtungen am Armaturengehäuse angebracht sind. Bei den Halterungen kann es sich beispielsweise um Nuten handeln, die so gestaltet sein können, dass ein O-Ring in ihnen festgelegt werden kann.

Der Ventileinsatz ist zum Einsetzen in eine dafür vorgesehene Ausnehmung einer Sanitärarmatur bestimmt. Derartige Ausnehmungen weisen in der Regel mindestens angenähert eine zylindrische Form auf. Demzufolge ist auch der Ventileinsatz mindestens angenähert zylindrisch. Erfindungsgemäß kann in Weiterbildung vorgesehen sein, dass der Ventileinlass und/oder der Ventilauslass an einer Stirnseite des Adapterelements angeordnet bzw. ausgebildet ist.

Die Erfindung schlägt in Weiterbildung vor, dass der Ventilschließkörper in einer Richtung senkrecht zu dem Ventilsitz bewegbar ausgebildet ist, wobei diese Richtung bei einem zylindrischen oder angenähert zylindrischen Ventileinsatz axial verläuft.

Es wurde bereits erwähnt, dass der Ventilsitz in dem Adapterelement angeordnet ist. Erfindungsgemäß ist vorgesehen, dass der Ventilsitz an dem Ende eines Rohrstutzens in dem Adapter ausgebildet ist und insbesondere von dem Ende des Rohrstutzens gebildet wird.

In nochmaliger Weiterbildung der Erfindung kann vorgesehen sein, dass der Ventileinlass in das Adapterelement zu einem Ringraum führt, der den Ventilsitz und den Rohrstutzen umgibt. Auf diese Weise hat die Wasserführung zwischen dem Ventileinlass und dem eigentlichen Ventil einen großen Querschnitt, so dass geringe Druckverluste eintreten.

Erfindungsgemäß kann vorgesehen sein, dass der Ventileinlass in das Adapterelement ein Sieb aufweist, das die gesamte Öffnung abdeckt.

Bei einer bevorzugten Ausführungsform erstreckt sich der Ventileinlass in der Mantelfläche des Adapterelements über mindestens etwa den halben Umfang des Adapterelements. Dies führt zu einer großen Einlassöffnung und einer großen Siebfläche, falls die Einlassöffnung von einem Sieb abgedeckt ist. Solche Siebe halten Verunreinigungen im zuströmenden Wasser zurück und vergrößern dadurch die Lebensdauer des Ventils.

Die Erfindung ist insbesondere mit Vorteil anwendbar, wenn es sich bei dem Ventil um ein Membranventil handelt.

Erfindungsgemäß kann der Einsatz so aufgebaut sein, dass er ein Basisteil enthält, mit dem das Adapterelement lösbar verbunden ist. Dies kann durch Schnappen oder eine sonstige Verriegelung geschehen. Das Basisteil dient dann zur Führung und Lagerung des Ventilschließkörpers und des Betätigungselements, mit dem der Ventilschließkörper betätigt wird.

Die Verbindung kann so gestaltet sein, dass eine beliebige Winkelausrichtung zwischen den beiden Teilen möglich ist.

Die Erfindung schlägt ebenfalls eine Kombination aus einem Einsatzbasisteil und mindestens zwei unterschiedlichen Adapterelementen vor, von denen bei einem ein erster Ventileinlass und der Ventilauslass in einer Mantelfläche und ein zweiter Ventileinlass in einer axialen Stirnfläche angeordnet sind und bei einem anderen der Ventilauslass in einer Stirnfläche des Adapterelements angeordnet ist, während der Ventileinlass in einer Mantelfläche angeordnet ist.

Weitere Merkmale, Einzelheiten und Vorzüge der Erfindung ergeben sich aus den Ansprüchen, deren Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen:
- Figur 1: schematisch einen Schnitt durch eine Sanitärarmatur mit einem in einer erfindungsgemäßen Kombination von Einsatzbauteil und austauschbaren Adapterelementen verwendbaren Ventileinsatz;
- Figur 2: in vergrößertem Maßstab einen Axialschnitt durch einen in einer erfindungsgemäßen Kombination von Einsatzbauteil und austauschbaren Adapterelementen verwendbaren Ventileinsatz;
- Figur 3: einen vergrößerten Schnitt durch ein in dem Ventileinsatz von Fig. 2 verwendetes erstes Adapterelement;
- Figur 4: die perspektivische Ansicht eines erfindungsgemäßen Ventileinsatzes;
- Figur 5: einen Schnitt durch ein in dem Ventileinsatz von Fig. 4 verwendetes weiteres Adapterelement;
- Figur 6: eine unterschiedliche Anwendung des Adapterelements der Figur 5;
- Figur 7: schematisch die Anwendung eines Ventileinsatzes in einer ersten Konfiguration;
- Figur 8: ebenfalls schematisch die Anwendung eines Ventileinsatzes in einer zweiten Konfiguration;
- Figur 9: die Anwendung eines Ventileinsatzes in einer dritten Konfiguration; und
- Figur 10: die Anwendung eines Ventileinsatzes in einer vierten Konfiguration.

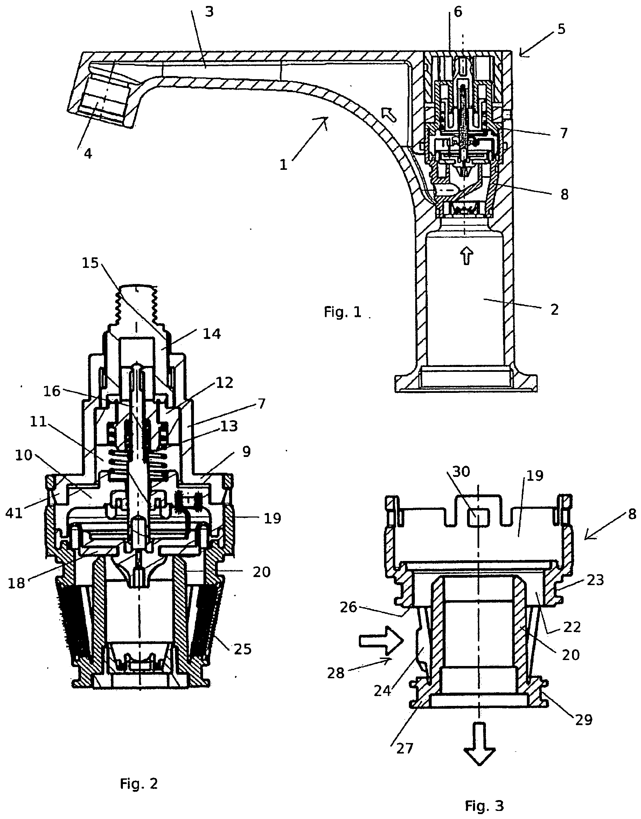

Die Figur 1 zeigt in einem Schnitt einen typischen Anwendungsfall einer Sanitärarmatur 1. Die Sanitärarmatur 1 enthält eine nach oben gerichtete zylindrische Säule 2, an deren oberen Ende ein Arm 3 horizontal zur Seite gerichtet angeformt ist, der an seinem Ende den Auslauf 4 enthält. Das Wasser muss also durch die hohle Säule 2 von unten kommend zu dem Auslauf 4 gelangen, vorher aber durch ein Absperrventil. Das Absperrventil 5 ist in einer Ausnehmung des Armaturengehäuses eingesetzt, die nach oben hin offen ist. Das Wasser soll möglichst wenig umgelenkt werden, da jede Umlenkung des Wassers Druckverluste verursacht. Man braucht also ein als Einsatz ausgebildetes Ventil, bei dem das Wasser von unten also axial eintritt und das es seitlich verlässt.

Der Ventileinsatz 5 enthält ein oberes Basisteil 7 und ein unteres an dem Basisteil angeordnetes Adapterelement 8. Dieses Adapterelement 8 übernimmt die Wasserführung von der Wassereinlassseite zu dem Ventil und von dem Ventil zu dem Wasserauslass aus dem Ventil. Einzelheiten des Adapterelements werden später noch erläutert.

Einzelheiten des Ventileinsatzes, der in Figur 1 angedeutet ist, ergeben sich aus der vergrößerten Darstellung der Figur 2, in der allerdings der Betätigungsgriff 6 des Ventils nicht dargestellt ist. Der Ventileinsatz enthält ein Basisteil 7. Das Basisteil 7 bildet einen ersten Abschnitt, an den sich ein zweiter Abschnitt 9 mit einem vergrößerten Durchmesser anschließt. In dem zweiten Abschnitt 9 ist ein Boden 10 eingesetzt, der zusammen mit den ersten Abschnitt einen Innenraum 11 bildet. In dem Innenraum 11 ist ein Gleitstück 12 verschiebbar angeordnet, das von einer Druckfeder 13 beaufschlagt ist. Ein Druckelement 14 ragt aus dem Basisteil 7 heraus. Es ist mit einem Gewindezapfen 15 versehen, mit dem ein Griff verbunden werden kann. In dem Gleitstück 12 ist eine Stange 16 angeordnet, die durch Drücken des Druckelements 14 nach unten verschoben werden kann. Die Stange 16 ist das Betätigungselement für ein Membranventil. Das Membranventil enthält einen Ventilschließkörper 18.

An dem Basisteil 7 ist ein Adapterelement 8 angebracht, das sich von dem Adapterelement 8 der Figur 1 aber unterscheidet. Es handelt sich also um ein anderes Adapterelement 8. Das Adapterelement weist einen oberen Abschnitt 19 auf, in dem es mit dem Basisteil 7 verbunden ist. Das Membranventil des Basisteils 7 ist so ausgebildet, dass es in den oberen Teil 19 des Adapterelements 8 hinein ragt.

Das Adapterelement 8 weist in seinem Inneren einen rohrartigen Stutzen 20 auf, der in Richtung auf das Basisteil 7 in einer scharfen Kante endet. Der Rohrstutzen 20 ist zylindrisch.

In dem Bereich des Adapterelements, der in axialer Richtung mit der scharfen Kante des rohrartigen Stutzens 20 zusammenfällt, ist ein Ringraum 22 gebildet, der dadurch entsteht, dass der obere angenähert zylindrische nach außen geschlossene Teil 19 des Adapterelements über die Längskante des Stutzens 20 hinaus ragt. An der Außenseite dieses Ringraums 22 ist eine umlaufende Nut 23 gebildet, die zur Aufnahme einer Dichtung dient.

Das untere Ende des Rohrstutzens 20 entspricht dem axialen Ende des Adapterelements. Dieses untere Ende des Rohrstutzens 20 ist über mehrere Stege 24 mit dem oberen Teil 19 des Adapterelements verbunden. Die dadurch offene Mantelfläche des unteren Teils des Adapterelements wird mit Sieben 25 versehen, die sich über im Wesentlichen den gesamten Umfang des offenen Teils des Adapterelements 8 erstrecken. Zwischen der unteren Kante 26 des oberen Teils 19 des Adapterelements und dem unteren Rand 27 des rohrartigen Stutzens 20 ist damit eine Öffnung gebildet, die den Ventileinlass 28 bildet. Auch die Außenseite des unteren Endes des Rohrstutzens 20 weist eine Nut 29 zur Aufnahme einer umlaufenden Dichtung auf.

Das in Figur 2 dargestellte Adapterelement 8 ist in vergrößertem Maßstab in Figur 3 dargestellt.

An dem Basisteil 7 zugewandten Ende des oberen Teils 19 des Adapterelements 8 weist die Randkante vier über den Umfang verteilte mit jeweils einer Öffnung versehene Laschen 30 auf, mit denen das Adapterelement 8 auf entsprechende Haken 41 des Basisteils 7 aufgeschnappt werden kann.

Die Figuren 2 und 3 zeigen also einen Ventileinsatz mit einem Adapterelement, bei dem der Einlass in den Ventileinsatz radial erfolgt, also der Ventileinlass in einer Mantelfläche angeordnet ist, und der Ventilauslass axial in einer Stirnfläche des Adapterelements angeordnet ist. Der Ventileinlass erstreckt sich mit Ausnahme der Stege 24 praktisch über die gesamte Mantelfläche. Dies gilt auch für die Siebe 25.

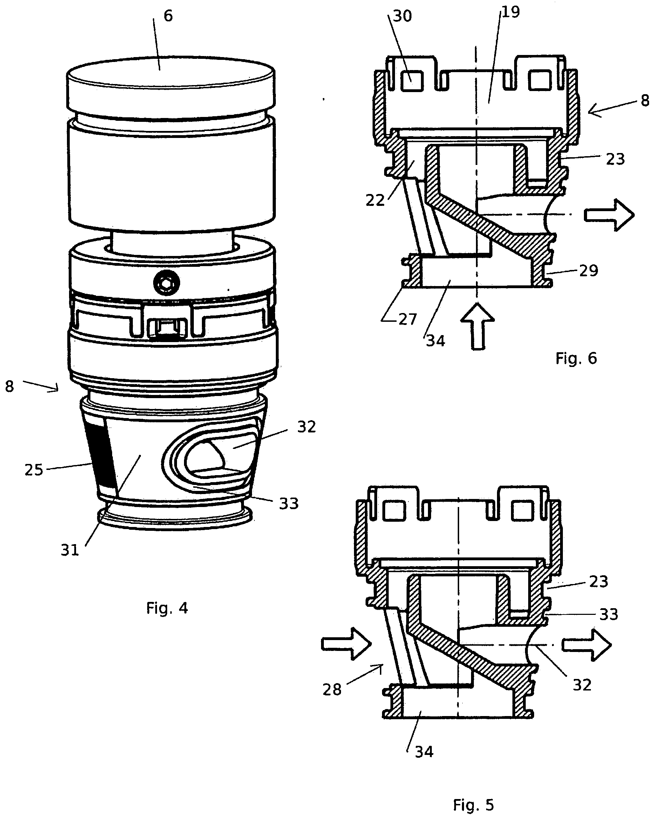

Die Figur 4 zeigt eine Ausführungsform eines Ventileinsatzes nach der Erfindung. Dabei zeigt die Figur 4 eine perspektivische Ansicht des Ventileinsatzes mit einem Griff 6. Der innere Aufbau des Ventileinsatzes entspricht, was die Betätigung des Ventils angeht, der der Figur 2 und wird daher nicht nochmals wiederholt. Das mit dem Basisteil 7 verbundene Adapterelement 8 enthält in der sichtbaren Mantelfläche 31 einen Ventilauslass 32, der von einer Nut 33 zur Aufnahme einer Dichtung umgeben ist. Im unteren Bereich des Adapterelements 8 ist ebenfalls die Nut 29 zu sehen. Einen Schnitt durch das Adapterelement 8 der Ausführungsform nach Figur 4 kann man der Figur 5 entnehmen. Der Stutzen 20 ist in seinem in das Innere des Ventileinsatzes gerichteten Endbereich in der gleichen Weise ausgebildet wie bei der vorhergehenden Ausführungsform. Seine Kante bildet also den Ventilsitz für den Ventilschließkörper 18. Der Stutzen ist dann allerdings nicht mehr zylindrisch ausgebildet, sondern mündet über eine rechtwinklige Abwägung in der Mantelfläche 31 und bildet dort den Ventilauslass 32.

Der Ventileinlass 28 ist auch hier in der Mantelfläche ausgebildet, wobei das Sieb 25 in der Darstellung der Figur 5 weggelassen ist, aber in der Figur 4 zu sehen ist. Bei dieser Ausführungsform erstreckt sich der Ventileinlass 28 und das dazu gehörende Sieb 25 etwa über den halben Umfang der Mantelfläche des Adapterelements 8. Die untere Öffnung 34 des Adapterelements 8 hat in diesem Fall keine Funktion.

Das Adapterelement der Figur 5 kann aber auch in einem Armaturenkörper so eingesetzt werden, dass es in der in Figur 6 dargestellten Weise die Wasserführung zwischen dem Gehäuse der Sanitärarmatur und dem Ventileinsatz übernimmt. In diesem Fall dient die untere Öffnung 34 des Adapterelements als Ventileinlass. Das Wasser strömt dann an dem abgewinkelten Stutzen 20 vorbei in Richtung auf den Ventilschließkörper 18, der wiederum auf der Stirnkante des Stutzens 20 aufliegt, solange das Ventil geschlossen ist.

Nach Öffnen des Ventils fließt das Wasser dann durch die Mantelfläche des Adapterelements 8 also radial nach außen in der durch die Pfeile dargestellten Weise.

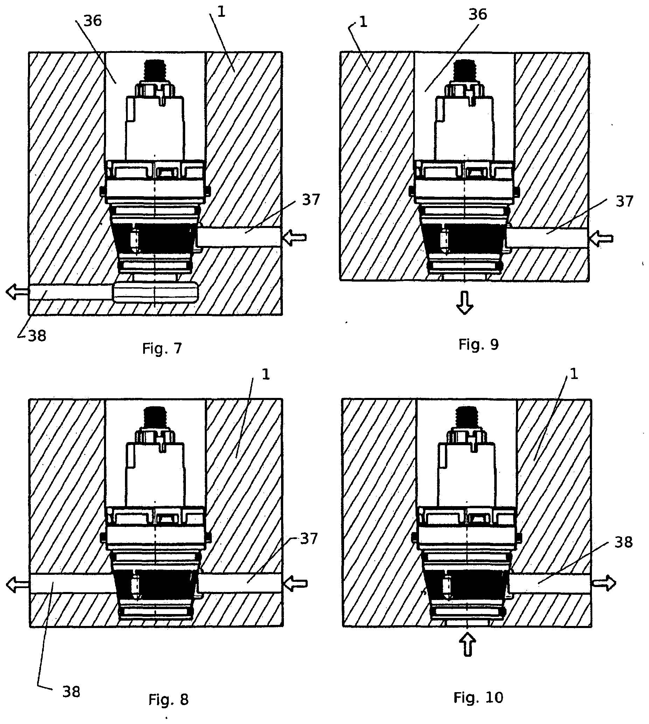

Die folgenden Figuren 7 bis 10 zeigen schematisch unterschiedliche Anwendungsarten, die mit einem Ventileinsatz nach der Erfindung verwirklicht werden können. Dabei ist die eigentliche Sanitärarmatur 1 nur schematisch dargestellt. Die Sanitärarmatur 1 enthält eine Ausnehmung 36, in der Leitungskanäle münden. Beispielsweise mündet in der Ausnehmung 36 der in Figur 7 dargestellten Sanitärarmatur ein Leitungskanal 37 quer zur Achse der Ausnehmung 36, während der weg führende Kanal 38 ebenfalls quer zur Längsachse der Ausnehmung verläuft. Allerdings verläuft der weg führende Kanal 38 in Axialrichtung versetzt gegenüber dem Kanal 37. In der Ausnehmung 36 ist ein Ventileinsatz nach der Erfindung eingesetzt, wobei ein Adapterelement gewählt ist, das der Ausführungsform nach Figur 3 entspricht.

Bei der Ausführungsform nach Figur 8 verlaufen die beiden erwähnten Kanäle 37, 38 auf gleicher Höhe. Auch diese Art der Leitungsführung kann mit einem Ventileinsatz nach der Erfindung verwirklicht werden, indem man in diesem Fall ein Adapterelement der Figur 5 verwendet.

Die Figur 9 zeigt eine Sanitärarmatur, bei der der das Wasser heranführende Kanal 37 quer zur Achse der Ausnehmung 36 verläuft, das Wasser aber axial abströmen soll. Für diese Art der Anordnung eignet sich das in Figur 3 dargestellte Adapterelement.

Die in Figur 10 dargestellte Ausführungsform einer Sanitärarmatur verwendet eine Kanalanordnung, die der Ausführungsform nach Figur 9 gerade entgegengesetzt ist. Das herbeigeführte Wasser kommt axial von unten und soll nach Verlassen des Ventils quer zur Achse der Ausnehmung 36 abströmen. Hierzu wird ein Adapterelement nach Figur 5 bzw. Figur 6 verwendet, da dieses in den beiden genannten Figuren dargestellte Adapterelement auf unterschiedliche Arten verwendet werden kann. Bei der Verwendung nach Figur 6 ist die linke Öffnung wirkungslos. Sie braucht daher auch kein Siebelement zu enthalten.

Wegen der Verwendung von vier Laschen 30, die jeweils um 90° um den Umfang des Adapterelements 8 versetzt angeordnet sind, lässt sich das Adapterelement zur Anpassung an die unterschiedlichsten Anwendungsfälle auch um 90° versetzt mit dem Basisteil des Ventileinsatzes verbinden, falls dies erforderlich sein sollte.

Diese Anordnung kann auch anders gestaltet werden, um eine kleinere Teilung zu erhalten. Beispielsweise ist auch eine ringförmige Hinterschneidung ohne eine winkelmäßige Festlegung möglich.

In der vorliegenden Anmeldung wurde die Verwendung eines Membranventils in Figur 2 dargestellt und beschrieben. Ein Membranventil ist aber nur ein Beispiel für ein Ventil, bei dem der Ventilschließkörper senkrecht zu der durch den Ventilsitz aufgespannten Fläche bewegbar ist, um das Ventil zu schließen. Die Erfindung ist natürlich auch mit anderen Ventilarten verwendbar, beispielsweise dann, wenn der Ventilschließkörper durch eine Schraubbewegung dem Ventilsitz angenähert bzw. von diesem entfernt wird.

## Patentansprüche

1. Ventileinsatz zum Einsetzen in eine Sanitärarmatur, mit
- einem Betätigungselement (16) für den Ventileinsatz,
- einem in den Ventileinsatz führenden ersten Ventileinlass (28) für Wasser,
- einem in den Ventileinsatz führenden zweiten Ventileinlass (34),
- einem aus dem Ventileinsatz heraus führenden Ventilauslass (32),
- einem Ventilsitz und
- einem mit dem Ventilsitz zusammenwirkenden, durch das Betätigungselement betätigbaren Ventilschließkörper (18),
- wobei der Ventileinsatz aus einem Einsatzbasisteil (7) und einem auswechselbaren Adapterelement (8) aufgebaut ist,
- wobei der erste Ventileinlass (28) in den Ventileinsatz und der Ventilauslass (32) aus dem Ventileinsatz in einer Mantelfläche (31) des Adapterelements (8) angeordnet sind und der zweite Ventileinlass (34) in den Ventileinsatz an einer axialen Stirnfläche des Adapterelements (8) angeordnet ist,
- wobei das Adapterelement (8) an einer unteren Stirnseite des Einsatzbasisteils (7) mit diesem verbunden ist,
- wobei der Ventilsitz an dem Ende eines Rohrstutzens (20) in dem Adapterelement (8) ausgebildet ist, insbesondere von dem Ende des Rohrstutzens (20) gebildet ist, und
- wobei der Rohrstutzen (20) abgewinkelt ausgebildet ist, wobei er in einem in das Innere des Ventileinsatzes gerichteten Endbereich, an dessen Ende der Ventilsitz ausgebildet ist, zylindrisch ist und von diesem rechtwinklig abgewinkelt in der Mantelfläche (31) des Adapterelements mündet und dort den Ventilauslass (32) bildet.

2. Ventileinsatz nach Anspruch 1, bei dem das Adapterelement (8) Aufnahmen (23, 29) für Dichtelemente zum Abdichten des Ventileinlasses (28) und/oder des Ventilauslasses (32) gegenüber der Sanitärarmatur (1) aufweist.

3. Ventileinsatz nach einem der vorhergehenden Ansprüche, bei dem der Ventilschließkörper (18) senkrecht zu dem Ventilsitz bewegbar ausgebildet ist.

4. Ventileinsatz nach einem der vorhergehenden Ansprüche, bei dem der erste Ventileinlass (28) zu einem den Ventilsitz umgebenden Ringraum führt.

5. Ventileinsatz nach einem der vorhergehenden Ansprüche, bei dem sich der erste Ventileinlass (28) über mindestens etwa den halben Umfang des Adapterelements (8) erstreckt.

6. Ventileinsatz nach einem der vorhergehenden Ansprüche, mit einem Membranventil.

7. Kombination aus einem Ventileinsatz nach einem der Ansprüche 1 bis 6, der das Einsatzbasisteil (7) und das auswechselbare Adapterelement (8) beinhaltet, und mindestens einem weiteren Adapterelement (8), das gegen das auswechselbare Adapterelement (8) austauschbar an der unteren Stirnseite des Einsatzbasisteils (7) mit diesem verbindbar ist, wobei das weitere Adapterelement (8) einen an einer Mantelfläche (31) des weiteren Adapterelements (8) angeordneten Ventileinlass (28) und einen an einer axialen Stirnfläche des weiteren Adapterelements (8) angeordneten Ventilauslass aufweist.

## Claims

1. Valve insert for insertion into a sanitary fitting, comprising
- an actuating element (16) for the valve insert,
- a first valve inlet (28) leading into the valve insert for water,
- a second valve inlet (34) leading into the valve insert,
- a valve outlet (32) leading out of the valve insert,
- a valve seat (20) and
- a valve closing member (18) interacting with the valve seat and actuatable by the actuating element,
- wherein the valve insert is made up of a basic insert part (7) and an interchangeable adapter element (8),
- wherein the first valve inlet (28) into the valve insert and the valve outlet (32) out of the valve insert are arranged in an enclosing surface (31) of the adapter element (8) and the second valve inlet (34) into the valve insert is arranged on an axial end face of the adapter element (8),
- wherein the adapter element (8) is connected to the basic insert part (7) at a lower end face thereof,
- wherein the valve seat is provided on the end of a pipe socket (20) in the adapter element (8), preferably formed by the end of the pipe socket (20), and
- wherein the pipe socket (20) is angle-formed so as to be cylindrical in an end portion directed into the interior of the valve insert, where the valve seat is provided at an end of said end portion, and to lead therefrom right-angled to the enclosing surface (31) of the adapter element to form the valve outlet (32) there.

2. Valve insert according to claim 1, wherein the adapter element (8) has receptacles (23, 29) for sealing elements to seal the valve inlet (28) and/or the valve outlet (32) from the sanitary fitting (1).

3. Valve insert according to any one of the preceding claims, wherein the valve closing member (18) is designed movable perpendicular to the valve seat.

4. Valve insert according to any one of the preceding claims, wherein the first valve inlet (28) leads to an annulus surrounding the valve seat.

5. Valve insert according to any one of the preceding claims, wherein the first valve inlet (28) extends over at least about half the circumference of said adapter element (8).

6. Valve insert according to any one of the preceding claims, comprising a diaphragm valve.

7. Combination of a valve insert according to any one of the preceding claims, comprising the basic insert part (7) and the interchangeable adapter element (8), and of at least one additional adapter element capable of being connected to the interchangeable adapter element at the lower end face of the basic insert part (7) to be interchangeable with the interchangeable adapter element, wherein the additional adapter element (8) comprises a valve inlet (28) arranged at an enclosing surface (31) of the additional adapter element (8), and a valve outlet arranged at an axial end face of the additional adapter element (8).

## Revendications

1. Insert de soupape destiné à être inséré dans un robinet sanitaire, comprenant
- un élément d'actionnement (16) pour l'insert de soupape,
- une première entrée de soupape (28) pour eau menant dans l'insert de soupape,
- une deuxième entrée de soupape (34) menant dans l'insert de soupape,
- une sortie de soupape (32) menant hors de l'insert de soupape,
- un siège de soupape et
- un élément de fermeture de soupape (18) agissant conjointement avec le siège de soupape et pouvant être commandé par l'élément d'actionnement,
- dans lequel l'insert de soupape est constitué d'une pièce de base de l'insert (7) et d'un adaptateur interchangeable (8),
- dans lequel la première entrée de soupape (28) dans l'insert de soupape et la sortie de soupape (32) hors de l'insert de soupape sont disposées dans une surface d'enveloppe (31) de l'adaptateur (8) et la deuxième entrée de soupape (34) dans l'insert de soupape est disposée sur une face frontale axiale de l'adaptateur (8),
- dans lequel l'adaptateur (8) est relié à la pièce de base de l'insert (7) sur une face frontale inférieure de cette dernière,
- dans lequel le siège de soupape est formé à l'extrémité d'un embout de conduite (20) dans l'adaptateur (8), en particulier par l'extrémité de l'embout de conduite (20), et
- dans lequel l'embout de conduite (20) est agencé sous forme angulaire de façon à être cylindrique dans une partie terminale orientée vers l'intérieur de l'insert de soupape, le siège de soupape étant fourni sur l'extrémité de ladite partie terminale, et s'étendant au-delà sous forme rectangulaire debouche dans la surface d'enveloppe (31) de l'adaptateur et y forme la sortie de soupape (32).

2. Insert de soupape selon la revendication 1, dans lequel l'adaptateur (8) présente des logements (23, 29) pour des éléments d'étanchéité destinés à étancher l'entrée de soupape (28) et/ou la sortie de soupape (32) par rapport au robinet sanitaire (1).

3. Insert de soupape selon l'une quelconque des revendications précédentes, dans lequel l'élément de fermeture de soupape (18) est conçu de manière mobile perpendiculairement au siège de soupape.

4. Insert de soupape selon l'une quelconque des revendications précédentes, dans lequel la première entrée de soupape (28) mène à un espace annulaire entourant le siège de soupape.

5. Insert de soupape selon l'une quelconque des revendications précédentes, dans lequel la première entrée de soupape (28) s'étend approximativement sur au moins la moitié de la circonférence de l'adaptateur (8).

6. Insert de soupape selon l'une quelconque des revendications précédentes, doté d'une soupape à diaphragme.

7. Combinaison d'un insert de soupape selon l'une quelconque des revendications 1 à 6, comportant la pièce de base de l'insert (7) et l'adaptateur interchangeable (8), et d'au moins un adaptateur supplémentaire (8), apte à être relié à l'adaptateur interchangeable sur la face frontale inférieure de la pièce de base de l'insert (7) et échangeable par l'adaptateur interchangeable (8), dans laquelle l'adaptateur supplémentaire (8) présente une entrée de soupape (28) disposée sur une surface d'enveloppe (31) de l'adaptateur supplémentaire (8) et une sortie de soupape disposée sur une face frontale axiale de l'adaptateur supplémentaire (8).
